# EUROPEAN PATENT APPLICATION

(11) **EP 2 924 591 A1**
(43) Date of publication of application: **30.09.2015**
(21) Application number: 15155481.3
(22) Date of filing: 17.02.2015
(51) Int. Cl.: G06F 17/30

(54) **Method and device for controlling page rollback**

(30) Priority: 24.03.2014 CN 201410109876
(71) Applicant: Xiaomi Inc., Beijing 100085 (CN)
(72) Inventor: Du, Zhongyi, 100085 Beijing (CN); Yu, Yifei, 100085 Beijing (CN); Xu, Guoshi, 100085 Beijing (CN)
(74) Representative: Delumeau, François Guy

(57) **Abstract**

The present disclosure discloses a method and a device for controlling page rollback, the method includes: acquiring (S101) a rollback operation; judging (S102) whether a preset rollback page corresponding to the rollback operation exists, wherein the preset rollback page is a preset page; and displaying (S103) the preset rollback page if the preset rollback page exists. No matter how many pages the pagination pages contain, when a user rollback operation is acquired, the rollback page where the headline locates may be opened directly, the operation of which is very simple and convenient, and avoids the problem caused by clicking the "back to the last page" widget by a user many times to return to the previous history page.

## Description

### TECHNICAL FIELD

The present disclosure relates to the field of communications technology, and more particularly, to a method and a device for controlling page rollback.

### BACKGROUND

Returning to the last page is a basic function of a browser, which may help a user to return to the last viewed page. In the interface of a browser, a return widget for offering a function of returning to the last page is generally provided. When the user needs to return to the last viewed page, he may return to the last page by clicking on the return widget.

In a scene where the user browses a plurality of pages, when it is needed to return to a certain history page before the last viewed page, if using the return widget in the related art to perform the return operation, the user needs to click many times the return widget to realize the function. Especially for an article displayed with a plurality of pagination pages, or for a plurality of pictures of the same series, such as web pages introducing athletes of a particular field or a regional tourism landscape, ranging from a few pages to as many as dozens of pages, operations are very complicated.

### SUMMARY

In order to overcome the problems in the related art, the present disclosure provides a method and a device for controlling page rollback.

According to a first aspect, the invention relates to a method for controlling page rollback, which includes: acquiring a rollback operation; judging whether a preset rollback page corresponding to the rollback operation exists, wherein the preset rollback page is a preset page; and displaying the preset rollback page if the preset rollback page exists.

In a particular embodiment of the invention, in a first possible implementation of the first aspect, the method further includes: acquiring a page content of a current page and a page content of a last viewed page before the current page; judging whether a structural similarity between the page content of the current page and the page content of the last viewed page before the current page exceeds a first preset similarity threshold; and if the structural similarity between the page content of the current page and the page content of the last viewed page before the current page does not exceed the first preset similarity threshold, setting the last viewed page before the current page as the preset rollback page; and if the structural similarity between the page content of the current page and the page content of the last viewed page before the current page exceeds the first preset similarity threshold, keeping the preset rollback page unchanged.

In a particular embodiment of the invention, the method further includes: acquiring a page content of a page to be jumped to corresponding to a preset hyperlink on a current page and a page content of the current page; judging whether a structural similarity between the page content of the page to be jumped to and the page content of the current page exceeds a second preset similarity threshold; if the structural similarity between the page content of the page to be jumped to and the page content of the current page exceeds the second preset similarity threshold, determining the current page as a pagination page; when the current page is the pagination page, acquiring the page content of the current page and a page content of a last viewed page before the current page; judging whether a structural similarity between the page content of the current page and the page content of the last viewed page before the current page exceeds a first preset similarity threshold; if the structural similarity between the page content of the current page and the page content of the last viewed page before the current page does not exceed the first preset similarity threshold, setting the last viewed page before the current page as the preset rollback page; and if the structural similarity between the page content of the current page and the page content of the last viewed page before the current page exceeds the first preset similarity threshold, keeping the preset rollback page unchanged.

In a particular embodiment of the invention, the acquiring the page content of the page to be jumped to corresponding to the preset hyperlink on the current page includes: acquiring all the hyperlinks on the current page; judging whether a preset hyperlink exists among all the hyperlinks on the current page, wherein feature characters in identifications of the preset hyperlink comprise: next page, the next article, the next chapter, next, → and/or↓; and if the preset hyperlink exists among all the hyperlinks on the current page, acquiring the page content of the page to be jumped to corresponding to the preset hyperlink.

In a particular embodiment of the invention, the method further includes: parsing DOM (Document Object Model) tree structures of document object models of the page contents of the two pages; and by comparing the DOM tree structures of the page contents of the two pages, determining a structural similarity between the page contents of the two pages.

In a particular embodiment of the invention, the acquiring a rollback operation includes: detecting whether the preset rollback widget is triggered; when the preset rollback widget is triggered, recording a time length of triggering for the rollback widget; judging whether the time length exceeds a preset time length threshold; and when the time length exceeds the preset time length threshold, determining that the rollback operation is acquired.

In a particular embodiment of the invention, in a sixth possible implementation of the first aspect, the judging whether a preset rollback page corresponding to the rollback operation exists includes: seeking whether a link address of the preset rollback page exists; or, seeking whether a page content of the preset rollback page is stored.

According to a second aspect, the invention relates to a device for controlling page rollback, which includes: an operation acquiring module configured to acquire a rollback operation; a first judging module configured to judge whether a preset rollback page corresponding to the rollback operation exists, wherein the preset rollback page is a preset page; and a displaying module configured to display the preset rollback page when the preset rollback page exists.

In a particular embodiment of the invention, the device further includes: a first page content acquiring module configured to acquire a page content of a current page and a page content of a last viewed page before the current page; a second judging module configured to judge whether a structural similarity between the page content of the current page and the page content of the last viewed page before the current page exceeds a first preset similarity threshold; and a first setting module configured to set the last viewed page before the current page as the preset rollback page when the structural similarity between the page content of the current page and the page content of the last viewed page before the current page does not exceed the first preset similarity threshold, and configured to keep the preset rollback page unchanged when the structural similarity between the page content of the current page and the page content of the last viewed page before the current page exceeds the first preset similarity threshold.

In a particular embodiment of the invention, the device further includes: a second page content acquiring module configured to acquire a page content of a page to be jumped to corresponding to a preset hyperlink on the current page and a page content of the current page; a third judging module configured to judge whether a structural similarity between the page content of the page to be jumped to and the page content of the current page exceeds a second preset similarity threshold; a first determining module configured to determine the current page as a pagination page when the structural similarity between the page content of the page to be jumped to and the page content of the current page exceeds the second preset similarity threshold; a first page content acquiring module configured to acquire the page content of the current page and a page content of a last viewed page before the current page when the current page is the pagination page; a second judging module configured to judge whether a structural similarity between the page content of the current page and the page content of the last viewed page before the current page exceeds a first preset similarity threshold; and a first setting module configured to set the last viewed page before the current page as the preset rollback page when the structural similarity between the page content of the current page and the page content of the last viewed page before the current page does not exceed the first preset similarity threshold; and configured to keep the preset rollback page unchanged when the structural similarity between the page content of the current page and the page content of the last viewed page before the current page exceeds the first preset similarity threshold.

In a particular embodiment of the invention,, the second page content acquiring module includes: a hyperlink acquiring module configured to acquire all the hyperlinks on the current page; a hyperlink judging module configured to judge whether a preset hyperlink exists among all the hyperlinks on the current page, wherein feature characters in identifications of the preset hyperlink comprise: next page, the next article, the next chapter, next, → and/or ↓; and a page content acquiring sub-module configured to acquire the page content of the page to be jumped to corresponding to the preset hyperlink when the preset hyperlink exists among all the hyperlinks on the current page.

In a particular embodiment of the invention,, the device further includes: a parsing module configured to parse DOM tree structures of document object models of the page contents of the two pages; and a comparing module configured to determine a structural similarity between the page contents of the two pages by comparing the DOM tree structures of the page contents of the two pages.

In a particular embodiment of the invention, the operation acquiring module includes: a trigger detecting module configured to detect whether the preset rollback widget is triggered; a time length recording module configured to record a time length of triggering for the rollback widget when the preset rollback widget is triggered; a time length judging module configured to judge whether the time length exceeds a preset time length threshold; and a second determining module configured to determine that the rollback operation is acquired when the time length exceeds the preset time length threshold.

In a particular embodiment of the invention,, the first judging module includes: a seeking module configured to seek whether a link address of the preset rollback page exists; or seek whether the page content of the preset rollback page is stored.

According to a third aspect, the invention also relates to a terminal for controlling page rollback, which includes: a processor; a storage configured to store instructions executable for the processor; wherein the processor is configured to: acquire a rollback operation; judge whether a preset rollback page corresponding to the rollback operation exists, wherein the preset rollback page is a preset page; and display the preset rollback page if the preset rollback page exists.

In one particular embodiment, the steps of the method for controlling page rollback are determined by computer program instructions.

Consequently, according to a fourth aspect the invention is also directed to a computer program for executing the steps of a method for controlling page rollback as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The present disclosure may have some advantageous effects as below.

With regard to some situations that a plurality of pagination pages are adopted for displaying an article or a plurality of pictures of the same series, by adopting the method for controlling page rollback provided by the exemplary embodiments of the present disclosure, a preset rollback page may be set to be a page where the headline of the article or of the series picture locates. In this way, when a user enters a pagination page by clicking the headline of the article, or enters web pages that display pictures one by one by clicking the headline of the pictures, no matter how many pages the pagination pages contain, when a user rollback operation is acquired, the rollback page where the headline locates may be opened directly, the operation of which is very simple and convenient, and avoids the problem caused by clicking the "back to the last page" widget by a user many times to return to the previous history page.

It should be understood that, both the general description hereinabove and the detailed description hereinafter are only exemplary and illustrative, and not to limit the present disclosure.

### BRIEF DESCRIPTION OF THE DRAWINGS

The accompanying drawings which are incorporated in and constitute a part of this specification, illustrate embodiments consistent with the disclosure, and together with the description serve to explain the principles of the disclosure.
Fig. 1 is an illustrative flow chart showing a method for controlling page rollback according to an exemplary embodiment;
Fig. 2 is a diagram showing an example of a web page according to an exemplary embodiment;
Fig. 3 is a diagram showing another example of a web page according to an exemplary embodiment;
Fig. 4 is an illustrative flow chart showing a method for controlling page rollback according to an exemplary embodiment;
Fig. 5 is an illustrative flow chart showing a method for controlling page rollback according to an exemplary embodiment;
Fig. 6 is a diagram showing a device for controlling page rollback according to an exemplary embodiment;
Fig. 7 is a diagram showing a device for controlling page rollback according to an exemplary embodiment;
Fig. 8 is a diagram showing a device for controlling page rollback according to an exemplary embodiment; and
Fig. 9 is an illustrative structural block diagram showing a terminal for controlling page rollback according to an exemplary embodiment.

The specific embodiments of the present disclosure have been illustrated in the above drawings and the detailed description thereof will be given hereinafter. These drawings and descriptions are only for illustrating the concept of the present disclosure with reference to the specific embodiments for those skilled in the art, rather than limiting the scope conceived by the present disclosure in any manner.

### DETAILED DESCRIPTION

The exemplary embodiments would be described in detail herewith, the examples of which are shown in the accompanying drawings. In the following description, when the following description refers to the drawings, unless expressed otherwise, the same number in different drawings refers to the same or similar elements. The embodiments described in the exemplary embodiments below do not represent all embodiments that are consistent with the present disclosure. On the contrary, they are only examples of the devices and the methods that are consistent with some of the aspects of the present disclosure as recited as that in the claims.

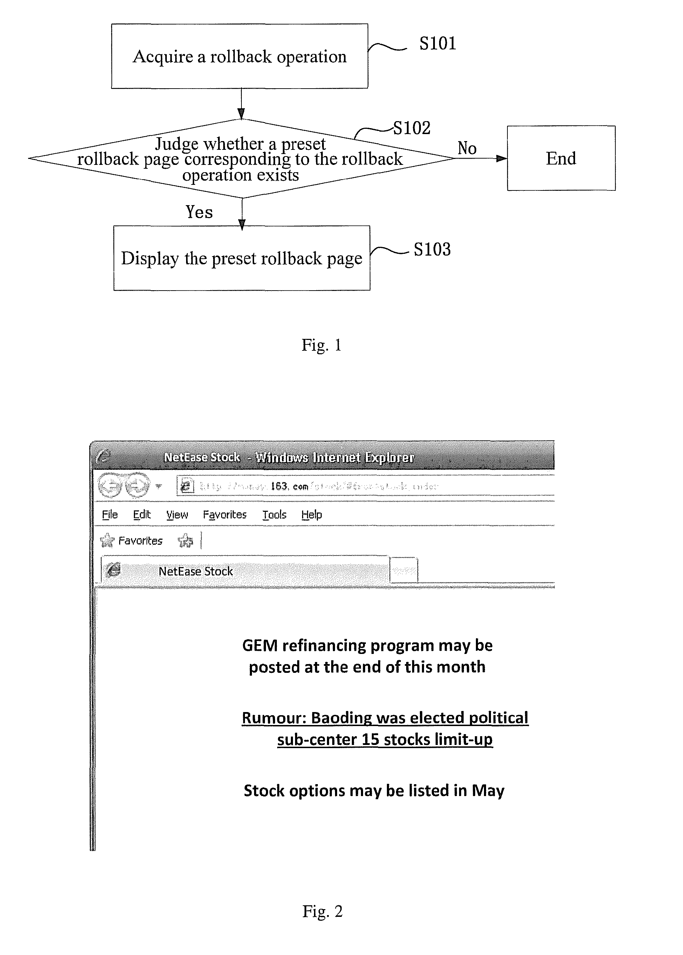

Fig. 1 is an illustrative flow chart showing a method for controlling page rollback according to an exemplary embodiment. As shown in Fig. 1, the method for controlling page rollback is used in a terminal, and the method includes the steps as below.

In step S101, a rollback operation is acquired.

In the embodiments of the present disclosure, the rollback operation is different from a return operation performed on common browsers that clicks the "back to the last page" widget. When acquiring a rollback operation, a dedicated rollback widget for receiving the rollback operation may be set on the browser, or the existing widgets on the browser may be functionally composited. For example: a "back to the last page" widget is usually set on a browser, by clicking which once it is able to return to the last page, while in a functional composition, the rollback operation may be acquired by long pressing the "back to the last page" widget.

In step S102, whether a preset rollback page corresponding to the rollback operation exists is judged.

The preset rollback page is a preset page, and the preset page may be either a last viewed page before the current page or a history page before the last viewed page before the current page. It can be seen that in the embodiments of the present disclosure, the preset rollback page is not always the last viewed page before the current page, but is set in advance according to a requirement.

When the preset rollback page exists, the preset rollback page is displayed in step S103.

In a realization of the preset rollback page, a link address of the preset rollback page may be acquired, and the preset rollback page is displayed by opening the link address. In addition, a page content of the pre-stored preset rollback page may further be acquired, and the page content is loaded on the browser, so as to display the preset rollback page.

When the preset rollback page doses not exist, namely, the preset rollback page is null, at this point no operation may be performed, which means the rollback operation has no effect, and the rollback flow is ended.

The method for controlling page rollback provided in the embodiments of the present disclosure detects a rollback operation firstly, then judges whether the preset rollback page corresponding to the rollback operation exists, and displays the preset rollback page when the preset rollback page corresponding to the rollback operation exists.

With regard to some situations that a plurality of pagination pages are adopted for displaying an article or a plurality of pictures of the same series, by adopting the method for controlling page rollback provided by the exemplary embodiments of the present disclosure, a preset rollback page may be set to be a page where the headline of the article or of the series picture locates. In this way, when a user enters a pagination page by clicking the headline of the article, or enters web pages that display pictures one by one by clicking the headline of the pictures, no matter how many pages the pagination pages contain, when a user rollback operation is acquired, the rollback page where the headline locates may be opened directly, the operation of which is very simple and convenient, and avoids the problem caused by clicking the "back to the last page" widget by a user many times to return to the previous history page.

Now the method for controlling page rollback will be described in combination with actual cases.

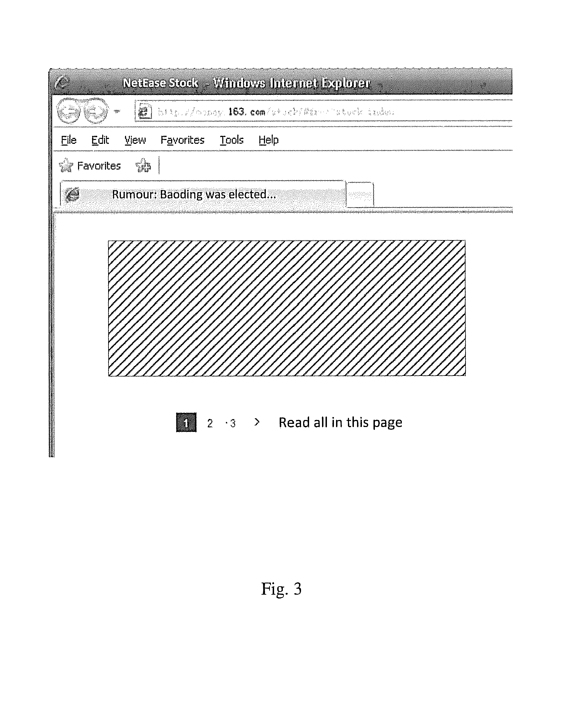

As shown in Fig. 2, it is a home page of a finance sector of a domestic news portal website. There is a news headline in the page, as shown by a horizontal line in Fig. 2, and after the news headline is clicked, a page shown in Fig. 3 is entered. It can be seen from Fig. 3 that, the contents corresponding to the news headline are displayed in three pagination pages, and when the user clicks in turn on "page 1", "page 2", and "page 3", and is browsing the content of "page 3", if the return operation in the related art is adopted, that is, when the user needs to return to the page shown in Fig. 2, the "back to the last page" widget needs to be clicked to jump to "page 2" from "page 3", and the "back to the last page" widget needs to be clicked again to return "page 1" from "page 2", then return to the page shown in Fig. 2 from "page 1", the operations of which are very complicated, especially for some situations that pagination pages are as much as up to a dozen pages, and even several dozens of pages, or hundreds of pages. The repeated processes are not tolerable for the user.

By adopting the method provided in the embodiments of the present disclosure, when the user enters the page shown in Fig. 3 by clicking the news headline, the page shown in Fig. 2 may be set as the preset rollback page, and when the user browses any one of the pagination pages shown in Fig. 3, the preset rollback page is kept unchanged. In this way, when the user stays at any one of the pagination pages shown in Fig. 3, and when the user inputs a rollback operation, it is able to return the preset rollback page shown in Fig. 2, which greatly facilitates the usage of the user. In addition, the method for controlling page rollback may be used not only in a browser so as to rollback the viewed pages, but also in other e-book reading software or picture browsing software, such that when it is entering in an e-book chapter reading or in a picture browsing within a certain picture set, the method for page rollback may be adopted to rollback to the preset rollback page.

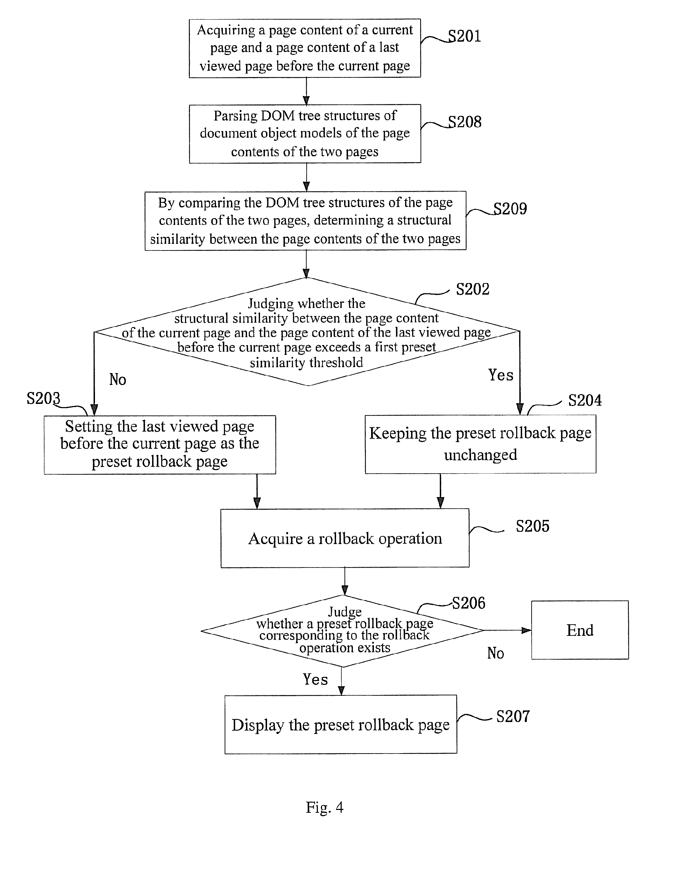

Fig. 4 is an illustrative flow chart showing a method for controlling page rollback according to an exemplary embodiment. As shown in Fig. 4, the method for controlling page rollback is used in a terminal, and the method includes the steps as below.

In step S201, a page content of a current page and a page content of a last viewed page before the current page are acquired.

In step S202, whether a structural similarity between the page content of the current page and the page content of the last viewed page before the current page exceeds a first preset similarity threshold is judged.

In judging the structural similarity between the page contents, DOM tree structure of the page content may be used to perform the judging. For example: if the DOM tree structure of the page content of the current page is the same as that of the page content of the last viewed page before the current page, it may be determined that the structural similarity between both (the page content of the current page and the page content of the last viewed page before the current page) exceeds the first preset similarity threshold. In addition, if the DOM tree structure of the page content of the current page and the DOM tree structure of the page content of the last viewed page before the current page are parent-child structures, it may also determine that the structural similarity between both exceeds the first preset similarity threshold. Further, the similarity between both may also be determined by other parameters in the page contents, which may be specified to quantified parameters, thus the first preset similarity threshold may be set as one specific value.

When the structural similarity between the page content of the current page and the page content of the last viewed page before the current page does not exceed a first preset similarity threshold, the last viewed page before the current page is set as the preset rollback page in step S203.

Since the plurality of pagination pages of the same article or the pagination pages of the picture set in same series generally adopt the same page structure therebetween, and if the structural similarity between the page content of the current page and the page content of the last viewed page may be determined as satisfying the requirements, it may be determined that both belong to a plurality of pagination pages corresponding to the same headline. On the contrary, if the structural similarity between both does not satisfy the requirements, it means that the current page and the last viewed page do not belong to the same headline, then the last viewed page before the current page needs to be set as the preset rollback page.

When the structural similarity between the page content of the current page and the page content of the last viewed page before the current page exceeds the first preset similarity threshold, the preset rollback page is kept unchanged in step S204.

If the page content of the current page and the page content of the last viewed page may be determined as belonging to a plurality of pagination pages corresponding to the same headline, it need not to re-set the preset rollback page, and the previously preset rollback page is maintained. In this way, when the user is browsing the plurality of pagination pages corresponding to the same headline, no matter which pagination page locates on the current page, the preset rollback page is fixed on the page where the headline locates, such that when a rollback is needed subsequently, it is able to directly rollback to the preset rollback page.

In step S205, a rollback operation is acquired.

In the exemplary embodiment of the present disclosure, the above step S205 may include steps as below.

In a first step , whether the preset rollback widget is triggered is detected.

A control for a preset rollback is triggered, which may be a mouse long time clicking on the preset rollback widget for a computer, or may be the user long time pressing the preset rollback widget for a mobile phone or a tablet PC with touch screens.

When the preset rollback widget is triggered, a time length of triggering for the rollback widget is recorded in a second step.

In a third step, whether the time length exceeds a preset time length threshold is judged.

When the time length exceeds the preset time length threshold, it is determined that the rollback operation is acquired in a fourth step.

Steps S206∼S207 are the same as the steps S101∼S103 in the exemplary embodiment shown in Fig. 1, the detailed description of which may be referred to the description of the steps S102∼S103 as above.

In the method for controlling page rollback provided by the embodiments of the present disclosure, only when the structural similarity between the page content of the current web page and the page content of the last viewed page before the current page does not exceed the preset threshold, that is, both do not belong to the pagination pages of the same headline, it needs to further determine whether the last viewed page before the current web page is to be set as the preset rollback page, and when the structural similarity between the page content of the current web page and the page content of the last viewed page before the current page exceeds the preset threshold, the previous preset rollback page is kept unchanged.

In this way, when the web pages corresponding to different headlines is browsed, the preset rollback page may be updated in time, such that the user may rollback to an ideal preset rollback page when browsing any of the web pages. In addition, when the user browses a plurality of pagination pages corresponding to the same headline, it is also able to assure that the preset rollback page is kept unchanged.

In addition, in another exemplary embodiment of the present disclosure, as shown in Fig. 4, the method for controlling page rollback may further include steps as below.

In step S208, DOM tree structures of document object models of the page contents of the two pages are parsed;

In step S209, by comparing the DOM tree structures of the page contents of the two pages, a structural similarity between the page contents of the two pages is determined.

The detailed description for determining the structure similarity between two page contents may be referred to the description of step S202 as above.

In the embodiments of the present disclosure, steps S208∼S209 may be performed as long as before step S202, the specific order of which is not limited thereto.

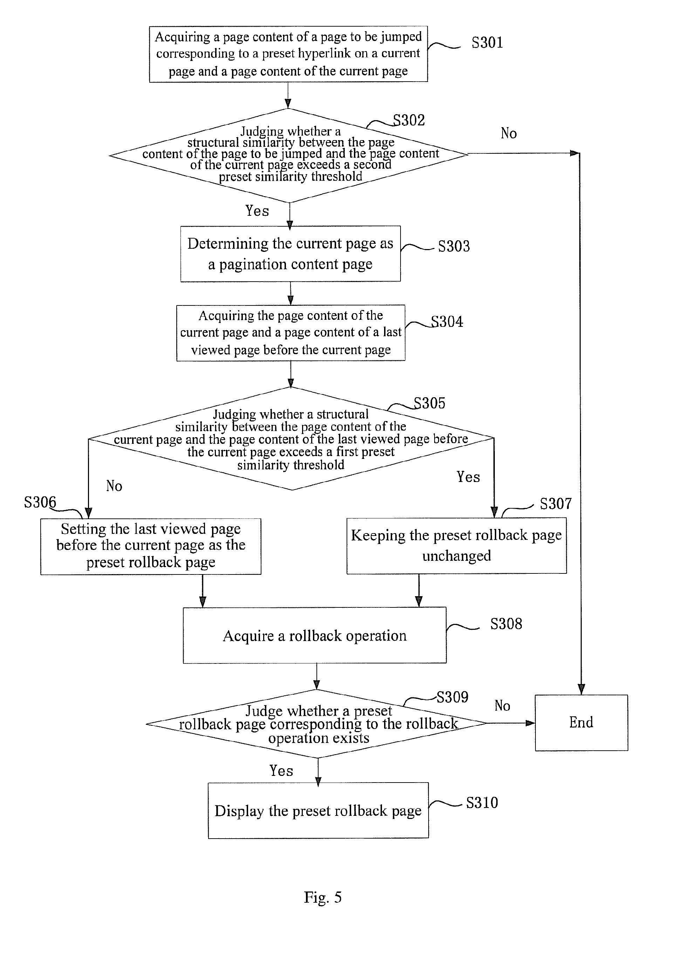

Fig. 5 is an illustrative flow chart showing a method for controlling page rollback according to an exemplary embodiment. As shown in Fig. 5, the method for controlling page rollback is used in a terminal, and the method includes the steps as below.

In step S301, a page content of a page to be jumped to corresponding to a preset hyperlink on the current page and a page content of the current page are acquired.

The page content of the page to be jumped to is acquired when the current page is displaying, which is a web page pre-reading function. In the exemplary embodiment of the present disclosure, the above step may include steps as below.

In a first step, all the hyperlinks on the current page are acquired.

In a second step, whether a preset hyperlink exists among all the hyperlinks on the current page is judged.

Feature characters in identifications of the preset hyperlink include but are not limited to: next page, the next article, the next chapter, next, → and/or ↓. In other embodiments, depending on different designs of web page designers, the feature characters in identifications of the preset hyperlink may be updated.

When the preset hyperlink exists among all the hyperlinks on the current page, the page content of the page to be jumped to corresponding to the preset hyperlink is acquired in a third step.

In step S302, whether a structural similarity between the page content of the page to be jumped to and the page content of the current page exceeds a second preset similarity threshold is judged.

In judging the structure similarity, it may be referred to the description of step S202 in the exemplary embodiment in Fig. 2, which is not described repeatedly here.

When the structural similarity between the page content of the page to be jumped to and the page content of the current page exceeds the second preset similarity threshold, the current page is determined as a pagination page in step S303, otherwise the flow is ended.

When the current page is the pagination page, the page content of the current page and the page content of the last viewed page before the current page are acquired in step S304.

In the exemplary embodiment shown in Fig. 2, by judging the structural similarity between the page content of the current page and the page content of the last viewed page before the current page, the preset rollback page is determined to be reset or maintained unchanged.

In the embodiments of the present disclosure, before judging the structural similarity between the page content of the current page and the page content of the last viewed page before the current page, by judging the structural similarity between the page content of the page to be jumped to and the page content of the current page, it is able to determine whether the current page is a pagination page, and after the current page is the pagination page is determined, the structural similarity between the page content of the current page and the page content of the last viewed page before the current page is judged.

In step S305, whether a structural similarity between the page content of the current page and the page content of the last viewed page before the current page exceeds a first preset similarity threshold is judged.

When the structural similarity between the page content of the current page and the page content of the last viewed page before the current page does not exceed a first preset similarity threshold, the last viewed page before the current page is set as the preset rollback page in step S306.

When the structural similarity between the page content of the current page and the page content of the last viewed page before the current page exceeds the first preset similarity threshold, the preset rollback page is kept unchanged in step S307.

Steps S304∼S307 are the same as the steps S201∼S204 in the exemplary embodiment shown in Fig. 2, and steps S308∼S310 are the same as the steps S101∼S103 in the exemplary embodiment shown in Fig. 1, the detailed description of which may be referred to the description of the exemplary embodiments as above.

In the embodiments of the present disclosure, by dually judging the structural similarity between the page content of the page to be jumped to and the page content of the current page and the structural similarity between the page content of the current page and the page content of the last viewed page before the current page, the update of the preset rollback page may be performed more accurately, which avoids the problems of the user failure operation of rollback caused by an incorrect update of the preset rollback page, and increases the accuracy of the rollback operation.

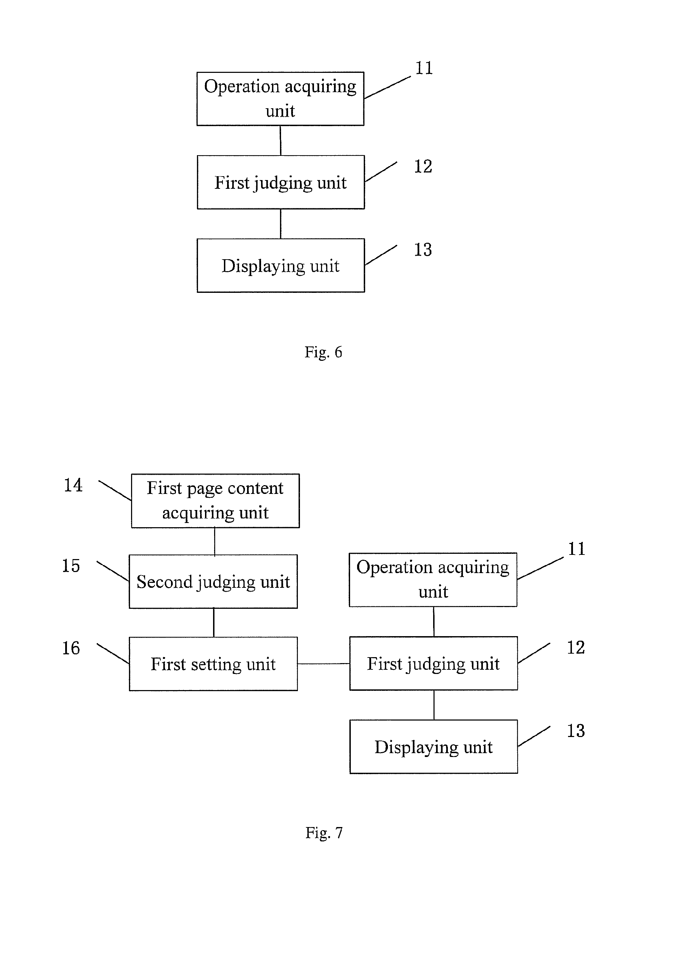

Fig. 6 is a diagram showing a device for controlling page rollback according to an exemplary embodiment. As shown in Fig. 6, the device includes an operation acquiring module 11, a first judging module 12 and a displaying module 13.

The operation acquiring module 11 is configured to acquire a rollback operation.

In the exemplary embodiment of the present disclosure, the operation acquiring module 11 may include: a trigger detecting module, a time length recording module, a time length judging module and a second determining module.

The trigger detecting module is configured to detect whether the preset rollback widget is triggered; the time length recording module is configured to record a time length of triggering for the rollback widget when the preset rollback widget is triggered; the time length judging module is configured to judge whether the time length exceeds a preset time length threshold; and the second determining module is configured to determine that the rollback operation is acquired when the time length exceeds the preset time length threshold.

The first judging module 12 is configured to judge whether a preset rollback page corresponding to the rollback operation exists.

In the exemplary embodiment of the present disclosure, the first judging module may include a seeking module.

The seeking module is configured to seek whether a link address of the preset rollback page exists; or seek whether a page content of the preset rollback page is stored.

The preset rollback page is a preset page, and the preset page is the last viewed page before the current page or a history page before the last viewed page before the current page.

The displaying module 13 is configured to display the preset rollback page when the preset rollback page exists.

With regard to some situations that a plurality of pagination pages are adopted for displaying an article or a plurality of pictures of the same series, by adopting the device for controlling page rollback provided by the exemplary embodiments of the present disclosure, a preset rollback page may be set to be a page where the headline of the article or of the series picture locates. In this way, when a user enters a pagination page by clicking the headline of the article, or enters web pages that display pictures one by one by clicking the headline of the pictures, no matter how many pages the pagination pages contain, when a user rollback operation is acquired, the rollback page where the headline locates may be opened directly, the operation of which is very simple and convenient, and avoids the problem caused by clicking the "back to the last page" widget by a user many times to return to the previous history page.

Fig. 7 is a diagram showing a device for controlling page rollback according to an exemplary embodiment. As shown in Fig. 7, the device includes an operation acquiring module 11, a first judging module 12, a displaying module 13, a first page content acquiring module 14, a second judging module 15 and a first setting module 16.

The descriptions of the operation acquiring module 11, the first judging module 12 and the displaying module 13 may be referred to the description as above in the exemplary embodiment shown in Fig. 6, which are not described repeatedly here.

The first page content acquiring module 14 is configured to acquire a page content of a current page and a page content of a last viewed page before the current page.

The second judging module 15 is configured to judge whether a structural similarity between the page content of the current page and the page content of the last viewed page before the current page exceeds a first preset similarity threshold.

The first setting module 16 is configured to set the last viewed page before the current page as the preset rollback page when the structural similarity between the page content of the current page and the page content of the last viewed page before the current page does not exceed the first preset similarity threshold; and configured to keep the preset rollback page unchanged when the structural similarity between the page content of the current page and the page content of the last viewed page before the current page exceeds the first preset similarity threshold.

In the device for controlling page rollback provided by the embodiments of the present disclosure, only when the structural similarity between the page content of the current web page and the page content of the last viewed page before the current page does not exceed the preset threshold, that is, both do not belong to the pagination pages of the same headline, it needs to further determine whether the last viewed page before the current web page is to be set as the preset rollback page, and when the structural similarity between the page content of the current web page and the page content of the last viewed page before the current page exceeds the preset threshold, the previous preset rollback page is kept unchanged.

In this way, when the web pages corresponding to different headlines is browsed, the preset rollback page may be updated in time, such that the user may rollback to an ideal preset rollback page when browsing any of the web pages. In addition, when the user browses a plurality of pagination pages corresponding to the same headline, it is also able to assure that the preset rollback page is kept unchanged.

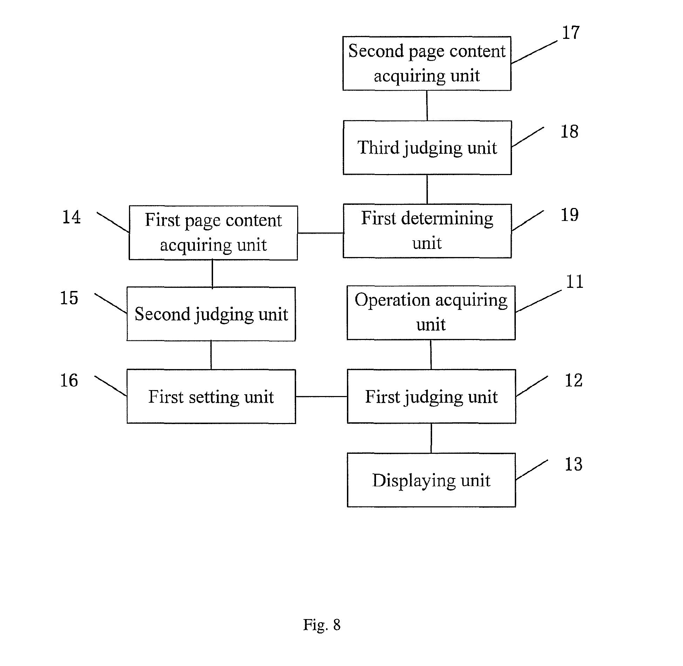

Fig. 8 is a diagram showing a device for controlling page rollback according to an exemplary embodiment. As shown in Fig. 8, the device includes an operation acquiring module 11, a first judging module 12, a displaying module 13, a first page content acquiring module 14, a second judging module 15, a first setting module 16, a second page content acquiring module 17, a third judging module 18 and a first determining module 19.

The descriptions of the operation acquiring module 11, the first judging module 12 and the displaying module 13 may be referred to the description as above in the exemplary embodiment shown in Fig. 6, which are not described repeatedly here. The descriptions of the first page content acquiring module 14, the second judging module 15 and the first setting module 16 may be referred to the description as above in the exemplary embodiment shown in Fig. 7, which anot described repeatedly here.

The second page content acquiring module 17 is configured to acquire a page content of a page to be jumped to corresponding to a preset hyperlink on the current page and a page content of the current page.

In the exemplary embodiment of the present disclosure, the second page content acquiring module 17 may include: a hyperlink acquiring module, a hyperlink judging module and a page content acquiring sub-module.

The hyperlink acquiring module is configured to acquire all the hyperlinks on the current page; the hyperlink judging module is configured to judge whether a preset hyperlink exists among all the hyperlinks on the current page, wherein feature characters in identifications of the preset hyperlink include: next page, the next article, the next chapter, next, → and/or ↓; and the page content acquiring sub-module is configured to acquire the page content of the page to be jumped to corresponding to the preset hyperlink when the preset hyperlink exists among all the hyperlinks on the current page.

The third judging module 18 is configured to judge whether a structural similarity between the page content of the page to be jumped to and the page content of the current page exceeds a second preset similarity threshold.

The first determining module 19 is configured to determine the current page as a pagination page when the structural similarity between the page content of the page to be jumped to and the page content of the current page exceeds the second preset similarity threshold.

In addition, the first page content acquiring module 14 is further configured to acquire a page content of the current page and a page content of the last viewed page before the current page when the current page is the pagination page.

In the embodiments of the present disclosure, by dually judging the structural similarity between the page content of the page to be jumped to and the page content of the current page and the structural similarity between the page content of the current page and the page content of the last viewed page before the current page, the update of the preset rollback page may be performed more accurately, which avoids the problems of the user failure operation of rollback caused by an incorrect update of the preset rollback page, and increases the accuracy of the rollback operation.

In the exemplary embodiment of the present disclosure, the device for controlling page rollback may further include: a parsing module and a comparing module.

The parsing module is configured to parse DOM tree structures of document object models of the page contents of the two pages;

The comparing module is configured to determine a structural similarity between the page contents of the two pages by comparing the DOM tree structures of the page contents of the two pages.

The comparing module may be connected with the second judging module or the third judging module, such that the second judging module or the third module may perform judging processes by using the structure similarity acquired by the comparing module.

In the devices in the above embodiments, the specific mode of performing operation for each module has been described in detail in the method embodiments, which will not be described here.

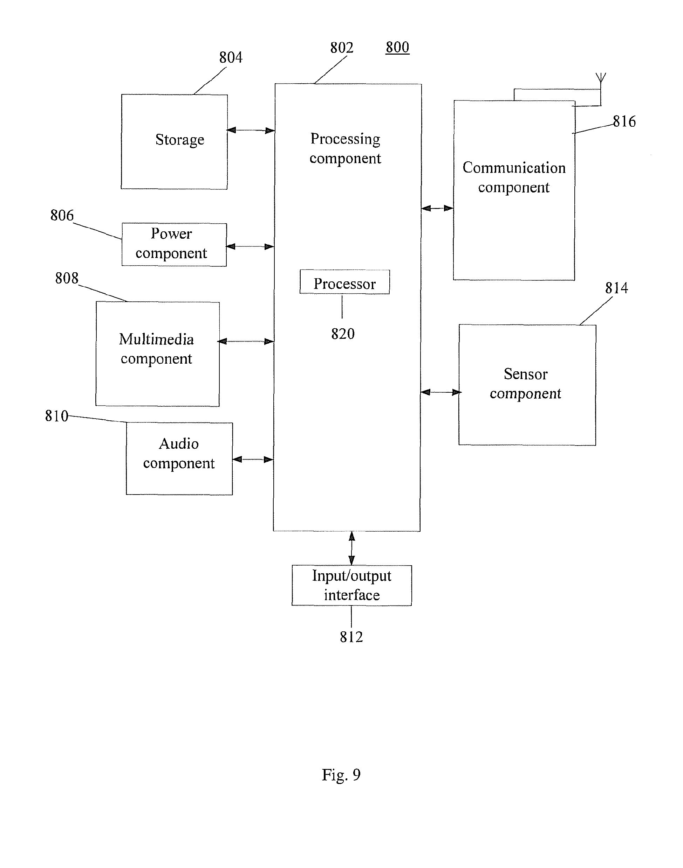

Fig. 9 is an illustrative structural block diagram showing a terminal 800 for controlling page rollback according to an exemplary embodiment. For example, the terminal 800 may be a mobile phone, a computer, a digital broadcast terminal, a message transceiver device, a gaming console, a tablet, a medical device, exercise equipment, a personal digital assistant, and the like.

Referring to Fig. 9, the terminal 800 may include one or more of the following components: a processing component 802, a storage 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The storage 804 is configured to store various types of data to support the operation of the terminal 800. Examples of such data include instructions for any applications or methods operated on the terminal 800, contact data, phonebook data, messages, pictures, video, etc. The storage 804 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power for the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slipes, and gestures on the touch panel. The touch sensors may not only sense a boundary of a touch or slipe action, but also sense a period of time and a pressure associated with the touch or slipe action. In some embodiments, the multimedia component 808 includes a front camera and/or a rear camera. The front camera and the rear camera may receive external multimedia data while the terminal 800 is in an operation mode such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 800 is in an operation mode such as a call mode, a recording mode, and a voice recognition mode. The received audio signal may be further stored in the storage 804 or transmitted via the communication component 816. In some embodiments, the audio component 810 further includes a speaker to output audio signals.

The I/O interface 812 provides an interface between the processing component 802 and peripheral interface modules such as a keyboard, a click wheel, buttons, and the like. The buttons may include, but are not limited to a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components (e.g., the display and the keypad of the terminal 800), a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 may access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there also provides a non-transitory computer-readable storage medium including instructions, such as the storage 804 including instructions, which is executable by the processor 820 in the terminal 800 for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium, when the instructions in the storage medium are executed by a processor of a mobile terminal, the mobile terminal is enabled to perform a method for controlling page rollback, and the method includes:
acquiring a rollback operation;
judging whether a preset rollback page corresponding to the rollback operation exists, wherein the preset rollback page is a preset page, and the preset page is a last viewed page before the current page or a history page before the last viewed page before the current page; and
displaying the preset rollback page if the preset rollback page exists.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the disclosure only be limited by the appended claims.

## Claims

1. A method for controlling page rollback, **characterized in that** the method comprises:
acquiring (S101) a rollback operation;
said method being **characterized in that** it comprises :
judging (S102) whether a preset rollback page corresponding to the rollback operation exists, wherein the preset rollback page is a preset page; and
displaying (S103) the preset rollback page if the preset rollback page exists.

2. The method according to claim 1, **characterized in that** the method further comprises:
acquiring (S201) a page content of a current page and a page content of a last viewed page before the current page;
judging (S202) whether a structural similarity between the page content of the current page and the page content of the last viewed page before the current page exceeds a first preset similarity threshold; and
if the structural similarity between the page content of the current page and the page content of the last viewed page before the current page does not exceed the first preset similarity threshold, setting (S203) the last viewed page before the current page as the preset rollback page; and
if the structural similarity between the page content of the current page and the page content of the last viewed page before the current page exceeds the first preset similarity threshold, keeping (S204) the preset rollback page unchanged.

3. The method according to claim 1, **characterized in that** the method further comprises:
acquiring (S301) a page content of a page to be jumped to corresponding to a preset hyperlink on a current page and a page content of the current page;
judging (S302) whether a structural similarity between the page content of the page to be jumped to and the page content of the current page exceeds a second preset similarity threshold;
if the structural similarity between the page content of the page to be jumped to and the page content of the current page exceeds the second preset similarity threshold, determining (S303) the current page as a pagination page;
when the current page is the pagination page, acquiring (S304) the page content of the current page and a page content of a last viewed page before the current page;
judging (S305) whether a structural similarity between the page content of the current page and the page content of the last viewed page before the current page exceeds a first preset similarity threshold;
if the structural similarity between the page content of the current page and the page content of the last viewed page before the current page does not exceed the first preset similarity threshold, setting (S306) the last viewed page before the current page as the preset rollback page; and
if the structural similarity between the page content of the current page and the page content of the last viewed page before the current page exceeds the first preset similarity threshold, keeping (S307) the preset rollback page unchanged.

4. The method according to claim 3, **characterized in that** the acquiring the page content of the page to be jumped to corresponding to the preset hyperlink on the current page comprises:
acquiring all the hyperlinks on the current page;
judging whether a preset hyperlink exists among all the hyperlinks on the current page, wherein feature characters in identifications of the preset hyperlink comprise:
next page, , the next article, the next chapter, next, → and/or↓; and
if the preset hyperlink exists among all the hyperlinks on the current page, acquiring the page content of the page to be jumped to corresponding to the preset hyperlink.

5. The method according to any one of Claims 1 to 4, **characterized in that** the method further comprises:
parsing (S208) DOM tree structures of document object models of the page contents of the two pages; and
by comparing (S209) the DOM tree structures of the page contents of the two pages, determining a structural similarity between the page contents of the two pages.

6. The method according to any one of Claims 1 to 5, **characterized in that** the acquiring a rollback operation comprises:
detecting whether the preset rollback widget is triggered;
when the preset rollback widget is triggered, recording a time length of triggering for the rollback widget;
judging whether the time length exceeds a preset time length threshold; and
when the time length exceeds the preset time length threshold, determining that the rollback operation is acquired.

7. A device for controlling page rollback, **characterized in that** the device comprises:
an operation acquiring module (11) configured to acquire a rollback operation;
said device being **characterized in that** it further comprises:
a first judging module (12) configured to judge whether a preset rollback page corresponding to the rollback operation exists, wherein the preset rollback page is a preset page; and
a displaying module (13) configured to display the preset rollback page when the preset rollback page exists.

8. The device according to claim 7, **characterized in that** the device further comprises:
a first page content acquiring module (14) configured to acquire a page content of a current page and a page content of a last viewed page before the current page;
a second judging module (15) configured to judge whether a structural similarity between the page content of the current page and the page content of the last viewed page before the current page exceeds a first preset similarity threshold; and
a first setting module (16) configured to set the last viewed page before the current page as the preset rollback page when the structural similarity between the page content of the current page and the page content of the last viewed page before the current page does not exceed the first preset similarity threshold, and configured to keep the preset rollback page unchanged when the structural similarity between the page content of the current page and the page content of the last viewed page before the current page exceeds the first preset similarity threshold.

9. The device according to claim 7, **characterized in that** the device further comprises:
a second page content acquiring module (17) configured to acquire a page content of a page to be jumped to corresponding to a preset hyperlink on the current page and a page content of the current page;
a third judging module (18) configured to judge whether a structural similarity between the page content of the page to be jumped to and the page content of the current page exceeds a second preset similarity threshold;
a first determining module (19) configured to determine the current page as a pagination page when the structural similarity between the page content of the page to be jumped to and the page content of the current page exceeds the second preset similarity threshold;
a first page content acquiring module (14) configured to acquire the page content of the current page and a page content of a last viewed page before the current page when the current page is the pagination page;
a second judging module (15) configured to judge whether a structural similarity between the page content of the current page and the page content of the last viewed page before the current page exceeds a first preset similarity threshold; and
a first setting module (16) configured to set the last viewed page before the current page as the preset rollback page when the structural similarity between the page content of the current page and the page content of the last viewed page before the current page does not exceed the first preset similarity threshold; and configured to keep the preset rollback page unchanged when the structural similarity between the page content of the current page and the page content of the last viewed page before the current page exceeds the first preset similarity threshold.

10. The device according to claim 9, **characterized in that** the second page content acquiring module comprises:
a hyperlink acquiring module configured to acquire all the hyperlinks on the current page;
a hyperlink judging module configured to judge whether a preset hyperlink exists among all the hyperlinks on the current page, wherein feature characters in identifications of the preset hyperlink comprise: next page, the next article, the next chapter, next, → and/or ↓; and
a page content acquiring sub-module configured to acquire the page content of the page to be jumped to corresponding to the preset hyperlink when the preset hyperlink exists among all the hyperlinks on the current page.

11. The device according to any one of Claims 7 to 10, **characterized in that** the device further comprises:
a parsing module configured to parse DOM tree structures of document object models of the page contents of the two pages; and
a comparing module configured to determine a structural similarity between the page contents of the two pages by comparing the DOM tree structures of the page contents of the two pages.

12. The device according to any one of Claims 7 to 11, **characterized in that** the operation acquiring module comprises:
a trigger detecting module configured to detect whether the preset rollback widget is triggered;
a time length recording module configured to record a time length of triggering for the rollback widget when the preset rollback widget is triggered;
a time length judging module configured to judge whether the time length exceeds a preset time length threshold; and
a second determining module configured to determine that the rollback operation is acquired when the time length exceeds the preset time length threshold.

13. A terminal (800) for controlling page rollback, **characterized in that** the terminal comprises:
a processor (802);
a storage (804) configured to store instructions executable for the processor;
wherein the processor is configured to:
acquire a rollback operation;
judge whether a preset rollback page corresponding to the rollback operation exists, wherein the preset rollback page is a preset page; and
display the preset rollback page if the preset rollback page exists.

14. A computer program including instructions for executing the steps of a method for controlling page rollback according to any one of claims 1 to 6 when said program is executed by a computer.

15. A recording medium readable by a computer and having recorded thereon a computer program including instructions for executing the steps of a method for controlling page rollback according to any one of claims 1 to 6.
